# EUROPEAN PATENT SPECIFICATION

(11) **EP 4 368 484 B1**
(45) Date of publication and mention of the grant of the patent: **02.07.2025**
(21) Application number: 23174781.7
(22) Date of filing: 23.05.2023
(51) Int. Cl.: B62J 41/00, B60K 11/04, B60K 11/06, B60K 11/08

(54) **STRADDLED VEHICLE**
GRÄTSCHSITZFAHRZEUG
VÉHICULE À SELLE

(30) Priority: 14.11.2022 JP 2022181747
(43) Date of publication of application: 15.05.2024
(73) Proprietor: Yamaha Hatsudoki Kabushiki Kaisha, Iwata-shi, Shizuoka 438-8501 (JP)
(72) Inventor: Okada, Yoshitaka, Iwata-shi (JP); Kurosu, Hirotoshi, Iwata-shi (JP)
(74) Representative: Grünecker Patent- und Rechtsanwälte PartG mbB

(56) References cited:
- JP-A- H0 717 449
- TW-A- 200 810 984
- US-B2- 10 247 083

## Description

The present invention relates to a straddled vehicle according to the preamble of independent claim 1. Such a straddled vehicle can be taken from the prior art document US 10 247 083 B2. Moreover, the prior art document JP H07 017 449 A discloses a straddled vehicle with a radiator, a radiator fan disposed behind the radiator with regard to a vehicle front-rear direction. A fan cover covers the radiator fan from behind with regard to the vehicle front-rear direction. The fan cover includes a rear surface facing the radiator fan behind the radiator fan with regard to the vehicle front-rear direction. The rear surface includes at least one bulging portion that bulges rearward with regard to the vehicle front-rear direction, and the bulging portion includes a rear outlet.

Some straddled vehicles include a radiator, a radiator fan, and a fan cover. The radiator fan generates a flow of air through the radiator. The fan cover is disposed to cover the radiator fan, and guides the air that has passed through the radiator (hereinafter referred to as "exhaust air"). For example, the vehicle disclosed in JP No. 2008-013149 A includes an air guide plate that covers the radiator fan. The air guide plate includes a lower opening and guides the exhaust air so that the exhaust air is discharged from the lower opening.

In order to improve the cooling effect of the radiator by the radiator fan, it is desirable that the opening area of the air outlet provided in the fan cover is large. However, when the exhaust air is discharged only from the air outlet provided at the bottom of the fan cover as in the vehicle described above, it is difficult to increase the opening area of the air outlet. Also, if an air outlet is provided in a portion other than the lower portion of the fan cover, the hot exhaust air may flow toward a component disposed behind the radiator fan. In that case, the component will be thermally affected by the exhaust air. It is an object of the present invention to provide straddled vehicle that can improve a cooling effect of a radiator by a radiator fan in a straddled vehicle, and to suppress a thermal influence on a component disposed behind the radiator fan. According to the present invention said object is solved by a straddled vehicle having the features of independent claim 1. Preferred embodiments are laid down in the dependent claims.

A straddled vehicle according to one aspect of the present disclosure includes a radiator, a radiator fan, and a fan cover. The radiator fan is disposed behind the radiator. The fan cover covers the radiator fan from behind. The fan cover includes a rear surface. The rear surface faces the radiator fan behind the radiator fan. The rear surface includes a bulging portion. The bulging portion bulges rearward. The bulging portion includes a rear outlet. The rear outlet is open laterally.

In the straddled vehicle according to the present aspect, the bulging portion of the fan cover includes the rear outlet. This increases the opening area in the fan cover. In addition, since the bulging portion has a shape that bulges rearward, the volume of the space inside the fan cover increases due to the bulging portion. This increases the cooling effect of the radiator by the radiator fan. Furthermore, the rear outlet is open laterally. Therefore, it is difficult for the exhaust air blown from the rear outlet to flow rearward of the radiator fan. As a result, the thermal influence on a component disposed behind the radiator fan is suppressed.

The rear outlet may extend in a vertical direction. In this case, the opening area of the rear outlet is increased. The rear outlet is disposed to face the radiator fan. In this case, the opening area of the rear outlet can be increased.

The fan cover may include a rear guide rib. The rear guide rib may be disposed on the rear surface of the fan cover so as to face the rear outlet. In this case, the flow of exhaust air blown out from the rear outlet can be controlled by the rear guide rib.

The rear guide rib may guide downward the exhaust air blown out from the rear outlet by the radiator fan. In this case, the exhaust air blown from the rear outlet can flow downward.

The fan cover may include a first lateral outlet and a lateral guide rib. The first lateral outlet may be disposed on a lateral side of the radiator fan. The lateral guide rib may be disposed in the fan cover and extend toward the first lateral outlet. In this case, the exhaust air inside the fan cover can be rectified so that the exhaust air can be efficiently blown out from the first lateral outlet.

The straddled vehicle may further include a side cowl. The side cowl may cover the radiator from the lateral side. The side cowl may include an opening. At least a portion of the opening may be located above the fan cover. The lateral guide rib may be disposed so as to blow the exhaust air by the radiator fan obliquely upward from the first lateral outlet toward the opening of the side cowl. In this case, the exhaust air blown out from the first lateral outlet is efficiently guided toward the opening of the side cowl.

The fan cover may include a second lateral outlet. The second lateral outlet may be disposed on a lateral side of the radiator fan. The second lateral outlet may be open so that the exhaust air by the radiator fan is blown obliquely upward from the second lateral outlet in accordance with the rotational direction of the radiator fan. In this case, the exhaust air is efficiently blown out from the second lateral outlet in accordance with the rotation direction of the radiator fan.

The straddled vehicle may further include a side cowl. The side cowl may cover the radiator from a lateral side. The side cowl may include an opening. At least a portion of the opening may be located above the fan cover. The second lateral air outlet may be open so that the exhaust air by the radiator fan is blown out from the second lateral air outlet toward the opening in accordance with the rotational direction of the radiator fan. In this case, the exhaust air is blown out from the second lateral outlet in accordance with the rotation direction of the radiator fan, and is efficiently discharged from the opening of the side cowl.

The fan cover may further include a first lateral outlet and a second lateral outlet. The first lateral outlet may be disposed on one lateral side of the radiator fan. The second lateral outlet may be disposed on the other lateral side of the radiator fan. In this case, the increased opening area improves the cooling effect of the radiator fan. In addition, since the exhaust air is blown out from the first and second lateral outlets disposed on both lateral sides of the radiator fan, the thermal influence on a component disposed behind the radiator fan is suppressed.

The fan cover may further include a lower outlet. The lower outlet may be disposed below the radiator fan. In this case, the increased opening area improves the cooling effect of the radiator fan. In addition, since the exhaust air is blown out from the lower outlet disposed below the radiator fan, the thermal influence on a component disposed behind the radiator fan is suppressed.

The radiator fan may rotate counterclockwise as seen from the rear view. The first lateral outlet may be disposed to the left of the radiator fan. The second lateral outlet may be disposed to the right of the radiator fan. The fan cover may include a lateral guide rib. The lateral guide rib may be disposed to blow out the exhaust air by the radiator fan obliquely upward and leftward from the first lateral outlet. The second lateral outlet may be open so that the exhaust air by the radiator fan is blown obliquely upward and rightward from the second lateral outlet. In this case, the exhaust air blown out from the first lateral outlet is guided by the lateral guide rib and is guided obliquely upward and leftward from the first lateral outlet. In addition, the exhaust air from the second lateral outlet is blown obliquely upward and rightward by the flow generated by the counterclockwise rotation of the radiator fan.

An upper end of the first lateral outlet may be located below an upper end of the second lateral outlet. In this case, the flow generated by the counterclockwise rotation of the radiator fan tends to flow obliquely downward and leftward at the first lateral outlet. By disposing the upper end of the first lateral outlet at a low position, the exhaust air is prevented from flowing obliquely downward and leftward from the first lateral outlet. As a result, the volume of exhaust air blown obliquely upward and leftward from the first lateral outlet can be increased.

The straddled vehicle may further include an engine, an air guide plate, and a fin. The engine may be disposed behind the radiator. The air guide plate may be disposed below the radiator. The air guide plate may guide running wind that flows downward along the radiator without passing through the radiator toward the engine through below the radiator. The fin may extend in the front-rear direction on the air guide plate. In this case, the running wind flowing downward along the radiator without passing through the radiator can be used to cool the engine. In addition, by rectifying the running wind with the fin, the flow speed of the running wind can be increased and sent to the engine. This improves the cooling efficiency of the engine.

### BRIEF DESCRIPTION OF THE DRAWINGS

FIG. 1 is a side view of a straddled vehicle according to an embodiment.
FIG. 2 is a front view of the straddled vehicle.
FIG. 3 is an enlarged left side view of the straddled vehicle.
FIG. 4 is a perspective view of a first side cowl.
FIG. 5 is an enlarged right side view of the straddled vehicle.
FIG. 6 is a perspective view of a radiator unit.
FIG. 7 is a rear view of the radiator unit.
FIG. 8 is a bottom view of the radiator unit.
FIG. 9 is a front view of a fan cover.
FIG. 10 is a left side view of the fan cover.
FIG. 11 is a right side view of the fan cover.
FIG. 12 is a side view showing a radiator unit according to a modification.
FIG. 13 is a perspective view of an air guide plate.

### DETAILED DESCRIPTION

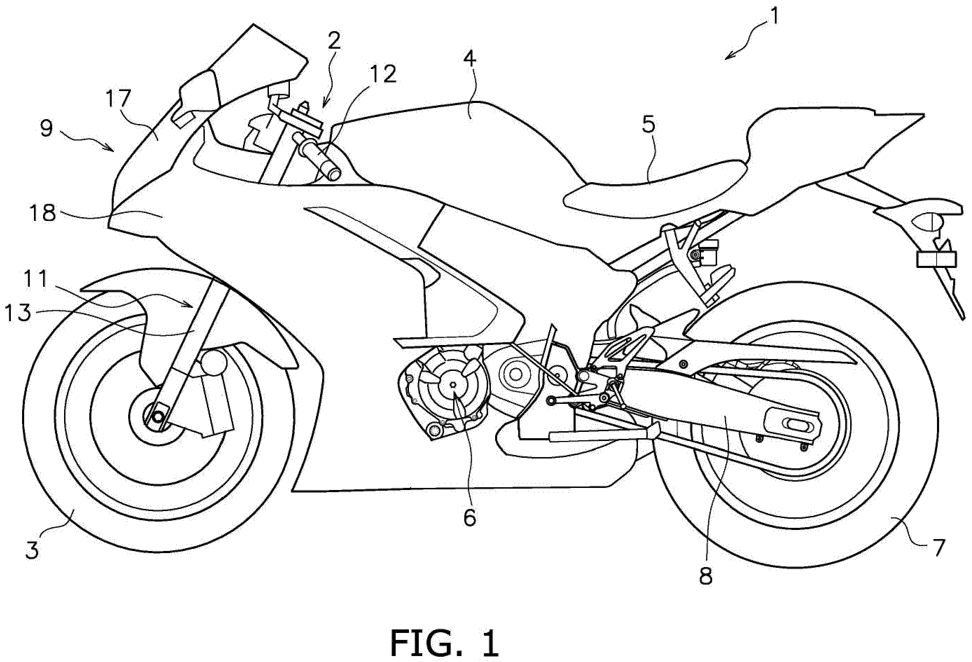

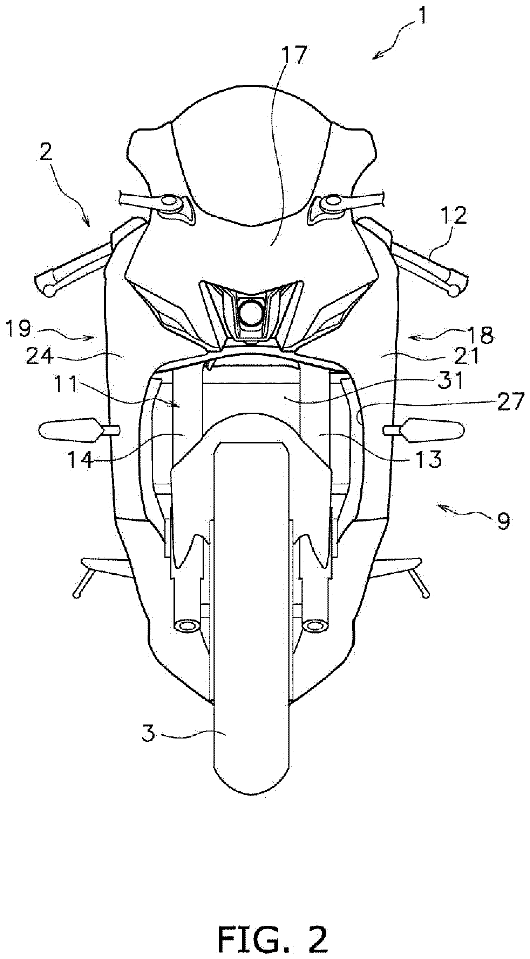

A straddled vehicle according to an embodiment will be described below with reference to the drawings. FIG. 1 is a side view of a straddled vehicle 1 according to an embodiment. FIG. 2 is a front view of the straddled vehicle 1. As shown in FIG. 1, the straddled vehicle 1 includes a steering device 2, a front wheel 3, a fuel tank 4, a seat 5, an engine 6, a rear wheel 7, a rear arm 8, and a vehicle body cover 9. In the present embodiment, the front, rear, left, and right directions refer to the front, rear, left, and right directions as seen from a rider on the seat 5.

The steering device 2 is steered by a rider. The steering device 2 includes a front fork 11 and a handle member 12. The front fork 11 rotatably supports the front wheel 3. The handle member 12 is connected to the front fork 11. As shown in FIG. 2, the front fork 11 includes a first suspension 13 and a second suspension 14.

The fuel tank 4 is disposed behind the handle member 12. The seat 5 is disposed behind the fuel tank 4. The engine 6 is disposed between the front wheel 3 and the rear wheel 7. The engine 6 is disposed below the fuel tank 4. The engine 6 generates driving force for rotating the rear wheel 7. The rear wheel 7 is disposed behind the engine 6. The rear wheel 7 is rotatably supported by the rear arm 8.

The vehicle body cover 9 includes a front cover 17, a first side cowl 18, and a second side cowl 19. The front cover 17 is disposed in front of the steering device 2. The first side cowl 18 and the second side cowl 19 extend rearward from the front cover 17. The first side cowl 18 and the second side cowl 19 cover the steering device 2 and the engine 6 from the lateral sides.

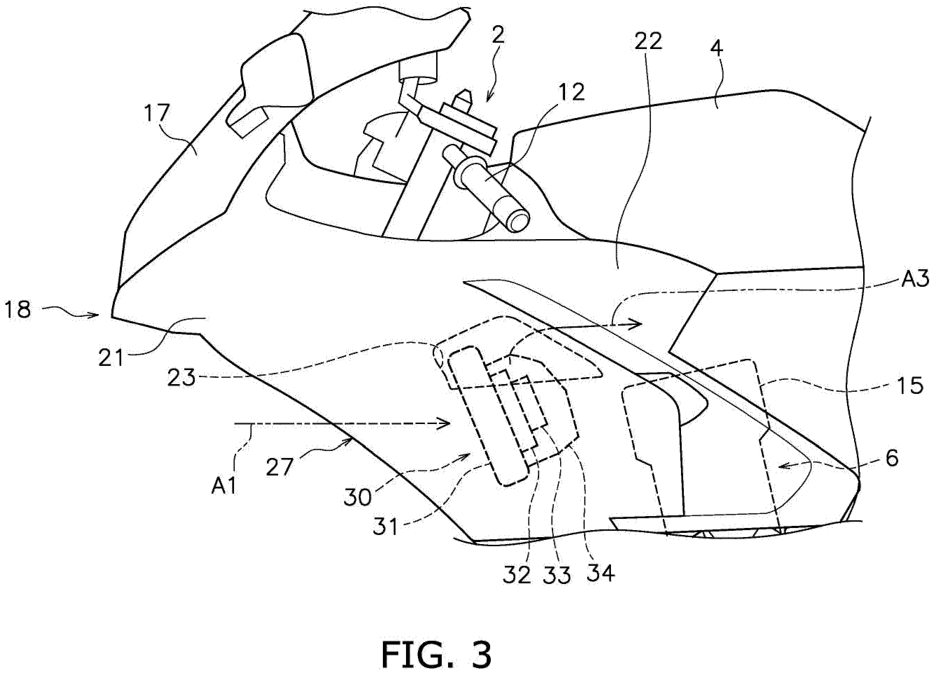

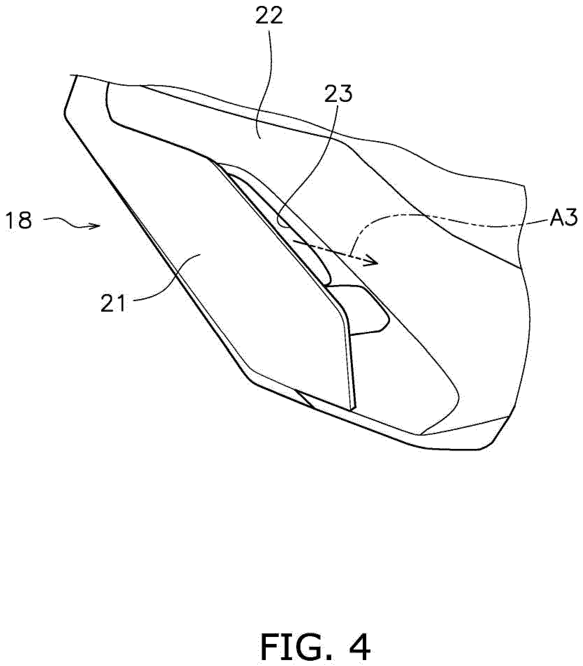

FIG. 3 is an enlarged left side view of the straddled vehicle 1. FIG. 4 is a perspective view of the first side cowl 18. As shown in FIGS. 3 and 4, the first side cowl 18 includes a first outer cowl 21 and a first inner cowl 22. The first outer cowl 21 is disposed laterally outside the first inner cowl 22. The first outer cowl 21 is disposed with a gap from the first inner cowl 22. The first inner cowl 22 includes a first opening 23. The first opening 23 communicates with the internal space of the vehicle body cover 9. The first outer cowl 21 covers the first opening 23 from the lateral side. The first outer cowl 21 overlaps the first opening 23 as seen from the vehicle side view.

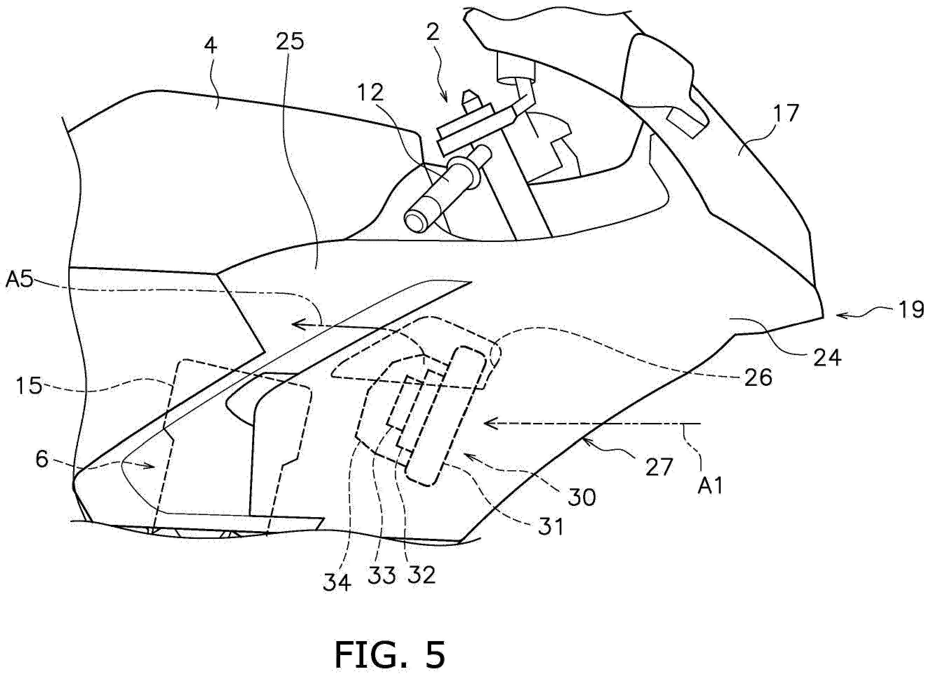

FIG. 5 is an enlarged right side view of the straddled vehicle 1. As shown in FIG. 5, the second side cowl 19 includes a second outer cowl 24 and a second inner cowl 25. The second outer cowl 24 is disposed laterally outside the second inner cowl 25. The second outer cowl 24 and the second inner cowl 25 have the same structures as the first outer cowl 21 and the first inner cowl 22, respectively. The second inner cowl 25 includes a second opening 26. The second opening 26 communicates with the internal space of the vehicle body cover 9.

As shown in FIG. 3, the straddled vehicle 1 includes a radiator unit 30. The radiator unit 30 is disposed behind the front fork 11. The radiator unit 30 is disposed in front of the engine 6. The radiator unit 30 is laterally covered with the first side cowl 18 and the second side cowl 19. The radiator unit 30 includes a radiator 31, a radiator fan 32, a fan motor 33, and a fan cover 34.

The radiator 31 cools the coolant of the engine 6. The first side cowl 18 and the second side cowl 19 described above cover the radiator 31 from the lateral sides. As shown in FIG. 2, the vehicle body cover 9 includes a front opening 27. The front opening 27 opens forward of the straddled vehicle 1. The front opening 27 is disposed below the front cover 17 as seen from the vehicle front view. The front opening 27 is disposed between the first side cowl 18 and the second side cowl 19. The radiator 31 is disposed facing the front opening 27 between the first side cowl 18 and the second side cowl 19.

The radiator fan 32 is disposed behind the radiator 31. The radiator fan 32 rotates to generate an air flow passing through the radiator 31 from front to rear.

The fan motor 33 is disposed behind the radiator fan 32. The fan motor 33 supports the radiator fan 32. The fan motor 33 rotates the radiator fan 32. The fan motor 33 is attached to the fan cover 34. The fan motor 33 rotates the radiator fan 32 counterclockwise as seen from the vehicle rear view.

The fan cover 34 is disposed behind the radiator fan 32. The fan cover 34 covers the radiator fan 32 from behind. As shown in FIGS. 3 and 5, the first side cowl 18 and the second side cowl 19 described above cover the fan cover 34 from the lateral sides. The engine 6 is disposed behind the fan cover 34. Specifically, the engine 6 includes a cylinder head 15. The cylinder head 15 is disposed behind the fan cover 34. At least a part of the first opening 23 and the second opening 26 described above is located above the fan cover 34.

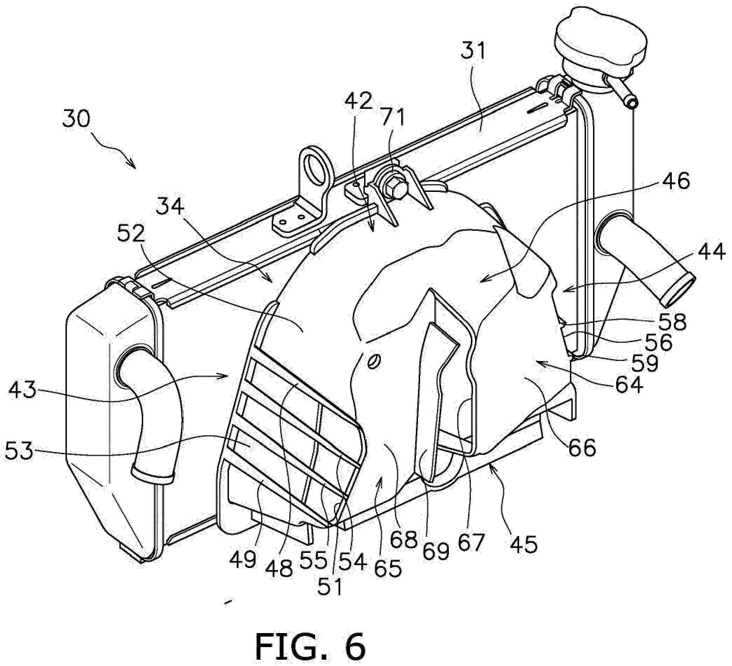

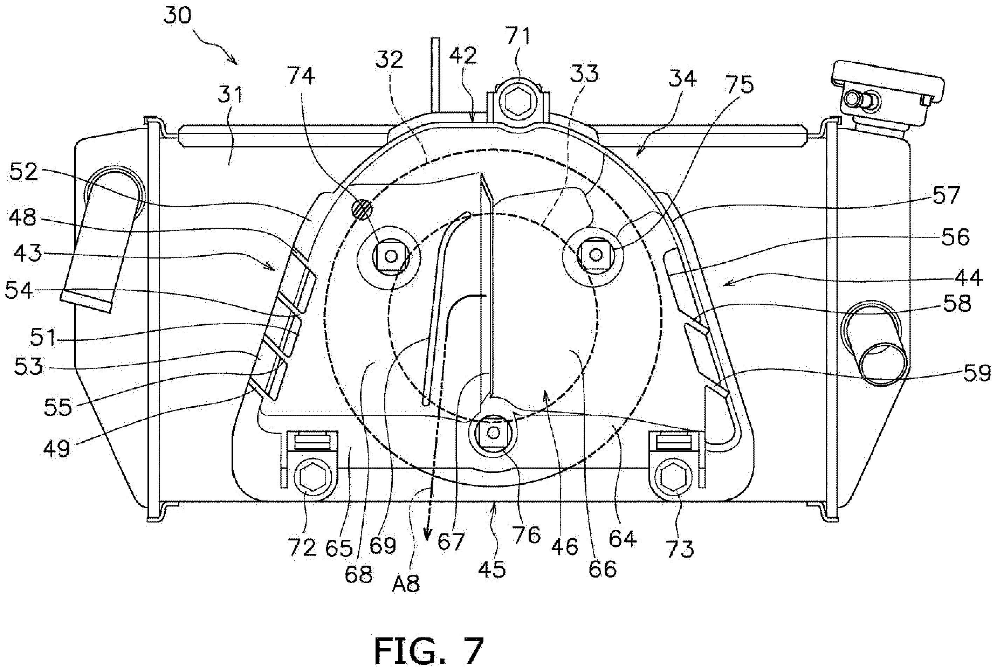

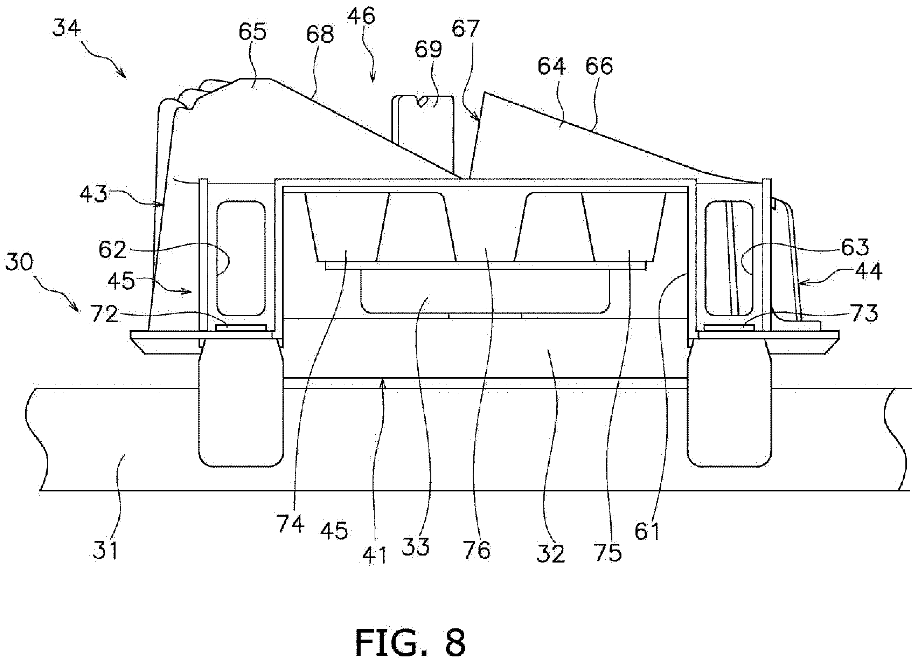

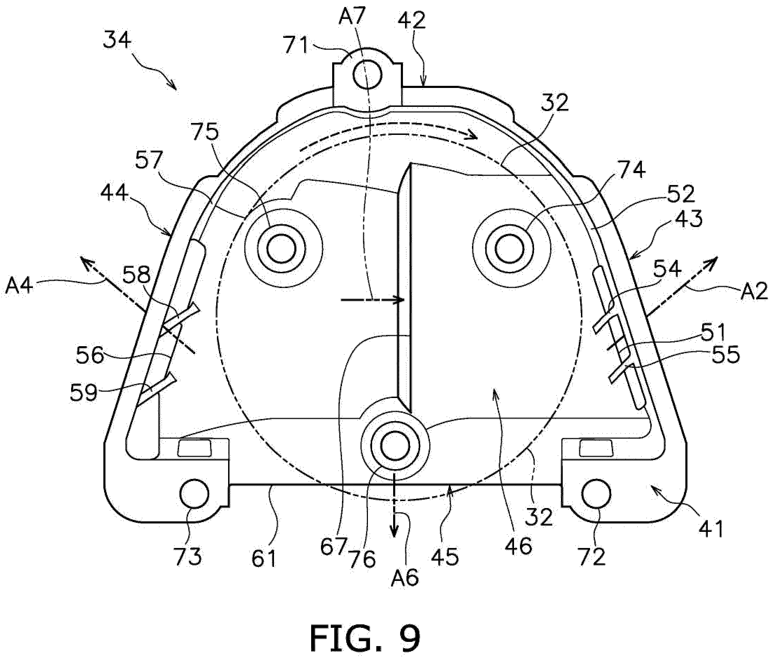

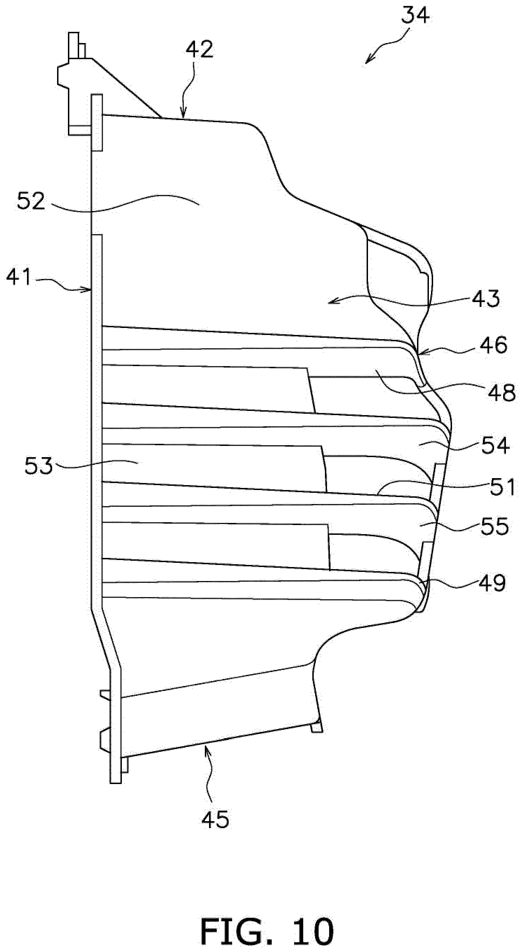

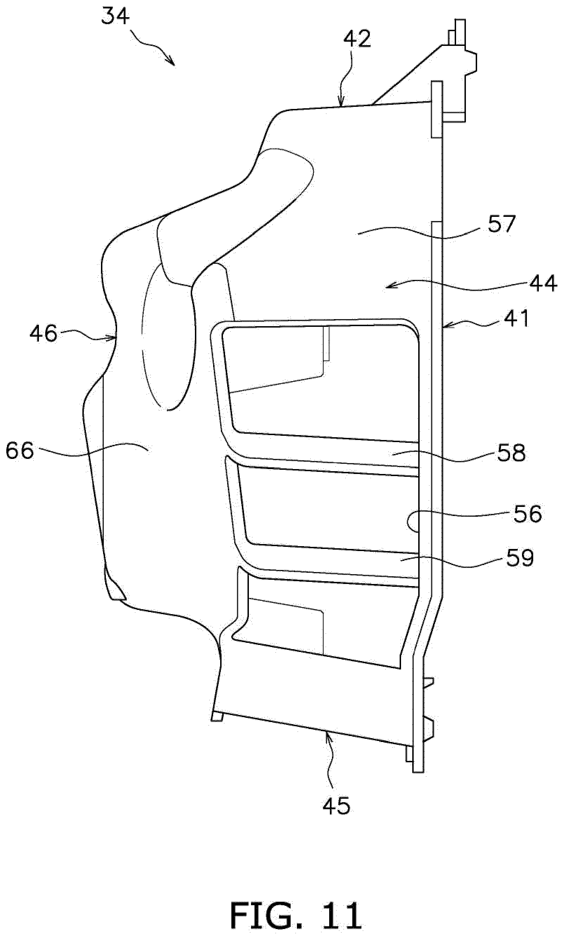

FIG. 6 is a perspective view of the radiator unit 30. FIG. 7 is a rear view of the radiator unit 30. FIG. 8 is a bottom view of the radiator unit 30. FIG. 9 is a front view of the fan cover 34. FIG. 10 is a left side view of the fan cover 34. FIG. 11 is a right side view of the fan cover 34. As shown in FIGS. 6-11, the fan cover 34 includes a front surface 41, an upper surface 42, a first side surface 43, a second side surface 44, a bottom surface 45, and a rear surface 46.

The front surface 41 is open. The front surface 41 is disposed facing the radiator 31 and is closed by the radiator 31. The upper surface 42 is disposed above the radiator fan 32. The upper surface 42 covers the radiator fan 32 from above. The upper surface 42 has an upwardly curved shape. The upper surface 42 has a curved shape that follows the contour of the radiator fan 32. The upper surface 42 is closed.

The first side surface 43 is disposed to the left of the radiator fan 32. The first side surface 43 covers the radiator fan 32 from the left side. The first side surface 43 is inclined downward and leftward. The first side surface 43 includes a first lateral outlet 51, a first side wall 52, a blocking portion 53, and a plurality of lateral guide ribs 48, 49, 54, and 55. The first lateral outlet 51 is disposed to the left of the radiator fan 32. The first lateral outlet 51 opens leftward. The first side wall 52 closes the upper side of the first lateral outlet 51. As shown in FIGS. 6 and 10, the first lateral outlet 51 is provided at the rear portion of the first side surface 43. A portion forward of the first lateral outlet 51 on the first side surface 43 is closed by the blocking portion 53. The blocking portion 53 is longer than the first lateral outlet 51 in the front-rear direction.

The lateral guide ribs 48, 49, 54, and 55 are disposed across the first lateral outlet 51 in the front-rear direction. As shown in FIG. 8, portions of the lateral guide ribs 48, 49, 54, and 55 are disposed inside the fan cover 34. The lateral guide ribs 48, 49, 54, and 55 extend toward the first lateral outlet 51. The lateral guide ribs 48, 49, 54, and 55 extend upward and leftward. The lateral guide ribs 48, 49, 54, and 55 project outward from the fan cover 34 from the outer surface of the first side surface 43.

The lateral guide ribs 48, 49, 54, and 55 include a first lateral guide rib 48 , a second lateral guide rib 49 , a third lateral guide rib 54 and a fourth lateral guide rib 55. The first lateral guide rib 48 is located highest among the lateral guide ribs 48, 49, 54, and 55. The first lateral guide rib 48 protrudes from an upper edge of the first lateral outlet 51. The second lateral guide rib 49 is located lowest among the lateral guide ribs 48, 49, 54, and 55. The second lateral guide rib 49 protrudes from a lower edge of the first lateral outlet 51. The third lateral guide rib 54 and the fourth lateral guide rib 55 are disposed between the first lateral guide rib 48 and the second lateral guide rib 49.

When the radiator fan 32 rotates counterclockwise as seen from the vehicle rear view, the exhaust air by the radiator fan 32 flows diagonally downward and leftward inside the first side surface 43. The lateral guide ribs 48, 49, 54, and 55 are disposed so as to blow the exhaust air by the radiator fan 32 obliquely upward and leftward from the first lateral outlet 51.

The second side surface 44 is disposed to the right of the radiator fan 32. The second side surface 44 covers the radiator fan 32 from the right side. The second side surface 44 is inclined downward and rightward. The second side surface 44 includes a second lateral outlet 56, a second side wall 57, and a plurality of reinforcing ribs 58 and 59. The second lateral outlet 56 is disposed to the right of the radiator fan 32. The second lateral outlet 56 opens rightward. When the radiator fan 32 rotates counterclockwise as seen from the vehicle rear view, the exhaust air by the radiator fan 32 flows diagonally upward and rightward inside the second side surface 44. The second lateral outlet 56 is open so that the exhaust air by the radiator fan 32 is blown out obliquely upward and rightward from the second lateral outlet 56 in accordance with the rotational direction of the radiator fan 32. The second side wall 57 closes the upper side of the second lateral outlet 56 on the second side surface 44.

The second lateral outlet 56 is provided over substantially the entire front-rear direction of the second side surface 44. The second lateral outlet 56 is longer than the first lateral outlet 51 in the front-rear direction. The second lateral outlet 56 is longer than the first lateral outlet 51 in the vertical direction. The upper end of the second lateral outlet 56 is located above the upper end of the first lateral outlet 51. In other words, the upper end of the first lateral outlet 51 is located below the upper end of the second lateral outlet 56. The opening area of the second lateral outlet 56 is larger than the opening area of the first lateral outlet 51. The reinforcing ribs 58 and 59 are disposed across the second lateral outlet 56 in the front-rear direction. The reinforcing ribs 58 and 59 extend downward and rightward.

The bottom surface 45 is disposed below the radiator fan 32. The bottom surface 45 includes a lower outlet 61. The lower outlet 61 is disposed below the radiator fan 32. As shown in FIG. 8, the lower outlet 61 is larger than the fan motor 33 in the left-right direction. The bottom surface 45 includes a first bottom opening 62 and a second bottom opening 63. The first bottom opening 62 is disposed to the left of the lower outlet 61. The second bottom opening 63 is disposed to the right of the lower outlet 61.

The rear surface 46 faces the radiator fan 32 behind the radiator fan 32. The rear surface 46 covers the radiator fan 32 from behind. The rear surface 46 includes a first bulging portion 64 and a second bulging portion 65. The first bulging portion 64 has a shape that bulges rearward. The first bulging portion 64 includes a first inclined surface 66 and a rear outlet 67. The first inclined surface 66 is inclined rearward and laterally inward. That is, the first inclined surface 66 is inclined rearward and leftward.

The rear outlet 67 is disposed behind the radiator fan 32. The rear outlet 67 is disposed to face the radiator fan 32. The rear outlet 67 overlaps the radiator fan 32 as seen from the vehicle rear view. The rear outlet 67 is disposed between the first lateral outlet 51 and the second lateral outlet 56 in the left-right direction. The rear outlet 67 opens leftward. The rear outlet 67 extends in the vertical direction. An upper end of the rear outlet 67 is located above the first lateral outlet 51. The upper end of the rear outlet 67 is located above the second lateral outlet 56.

The second bulging portion 65 has a shape that bulges rearward. The second bulging portion 65 is disposed to the left of the first bulging portion 64. The second bulging portion 65 includes a second inclined surface 68. The second inclined surface 68 is inclined leftward and rearward. The second inclined surface 68 extends leftward and rearward from the rear outlet 67.

The fan cover 34 includes a rear guide rib 69. The rear guide rib 69 is disposed to face the rear outlet 67 on the rear surface 46 of the fan cover 34. The rear guide rib 69 is disposed on the second inclined surface 68. The rear guide rib 69 is disposed to the left of the rear outlet 67. The rear guide rib 69 extends in the vertical direction. The rear guide rib 69 guides downward the exhaust air by the radiator fan 32 blown out from the rear outlet 67.

As shown in FIG. 7, the fan cover 34 includes a plurality of radiator fixing portions 71-73. The fan cover 34 is fixed to the radiator 31 at the plurality of radiator fixing portions 71-73. The plurality of radiator fixing portions 71-73 includes a first radiator fixing portion 71, a second radiator fixing portion 72, and a third radiator fixing portion 73. The first radiator fixing portion 71 is connected to the upper surface 42. The second radiator fixing portion 72 and the third radiator fixing portion 73 are connected to the bottom surface 45.

As shown in FIG. 8, the fan cover 34 includes a plurality of motor fixing portions 74-76. The fan motor 33 is fixed to the plurality of motor fixing portions 74-76. The plurality of motor fixing portions 74-76 includes a first motor fixing portion 74, a second motor fixing portion 75, and a third motor fixing portion 76. The first motor fixing portion 74, the second motor fixing portion 75, and the third motor fixing portion 76 are connected to the rear surface 46. The first motor fixing portion 74, the second motor fixing portion 75, and the third motor fixing portion 76 protrude from the rear surface 46 toward the inside of the fan cover 34.

In the straddled vehicle 1 according to the present embodiment, as indicated by an arrow A1 in FIG. 3, running wind is taken into the vehicle body cover 9 through the front opening 27. The running wind passes through the radiator 31 as the radiator fan 32 rotates. The coolant of the engine 6 is thereby cooled in the radiator 31.

The running wind that has passed through the radiator 31 is taken into the fan cover 34 as exhaust air. As indicated by an arrow A2 in FIG. 9, part of the exhaust air is guided by the lateral guide ribs 48, 49, 54, and 55 and blown obliquely upward from the first lateral outlet 51. The exhaust air from the first lateral outlet 51 is blown out toward the first opening 23 of the first side cowl 18 and is discharged toward the rear of the vehicle through between the first outer cowl 21 and the first inner cowl 22 as indicated by an arrow A3 in FIG. 3.

As indicated by an arrow A4 in FIG. 9, part of the exhaust air is blown obliquely upward from the second lateral outlet 56 in accordance with the rotational direction of the radiator fan 32. The exhaust air from the second lateral outlet 56 is blown out toward the second opening 26 of the second side cowl 19 and is discharged toward the rear of the vehicle through between the second outer cowl 24 and the second inner cowl 25 as shown by an arrow A5 in FIG. 5.

Part of the exhaust air is blown downward from the lower outlet 61 as indicated by an arrow A6 in FIG. 9. Part of the exhaust air is blown leftward from the rear outlet 67 as indicated by an arrow A7. As indicated by an arrow A8 in FIG. 7, the exhaust air from the rear outlet 67 is guided downward by the rear guide rib 69. The exhaust air from the lower outlet 61 and the rear outlet 67 flows downward from the fan cover 34, passes through the inside of the vehicle body cover 9, and is discharged to the rear of the vehicle.

In the straddled vehicle 1 according to the present embodiment, the first bulging portion 64 of the fan cover 34 includes the rear outlet 67. As a result, the opening area of the fan cover 34 is increased. Further, since the first bulging portion 64 has a shape that bulges rearward, the volume of the space inside the fan cover 34 is increased by the first bulging portion 64. Thereby, the cooling effect of the radiator 31 by the radiator fan 32 is increased. Furthermore, the rear outlet 67 opens laterally. Therefore, it is difficult for the exhaust air blown out from the rear outlet 67 to flow rearward of the radiator fan 32. Thereby, the thermal influence on a component disposed behind the radiator fan 32 is suppressed.

The straddled vehicle 1 according to the embodiment described above is a so-called full cowl type motorcycle. However, the straddled vehicle is not limited to a full cowl type motorcycle, and may be a half cowl or naked type motorcycle. Alternatively, the straddled vehicle may be a vehicle such as a scooter or moped.

The structure of the fan cover 34 is not limited to that of the above embodiment, and may be modified. For example, the shape of the first lateral outlet 51 may be changed. The first lateral outlet 51 may be omitted. The shape of the second lateral outlet 56 may be changed. The second lateral outlet 56 may be omitted. The shape of the lower outlet 61 may be changed. The lower outlet 61 may be omitted. The shape of the rear outlet 67 may be changed. The shape of the rear guide rib 69 may be changed.

In the above embodiment, the radiator fan 32 is a counterclockwise radiator fan, but may be a clockwise radiator fan. In that case, the fan motor 33 may rotate the radiator fan 32 clockwise as seen from the vehicle rear view. In that case, in the fan cover 34, the first side surface 43 and the second side surface 44 may be disposed to be left-right reversed from the above embodiment. That is, in a case that the radiator fan 32 rotates clockwise as seen in the vehicle rear view, the first lateral outlet 51 and the second lateral outlet 56 in the fan cover 34 may be disposed in the opposite direction from the above embodiment. The first bulging portion 64 and the second bulging portion 65 may be disposed to be left-right reversed from the above embodiment. The second bulging portion 65 may be omitted.

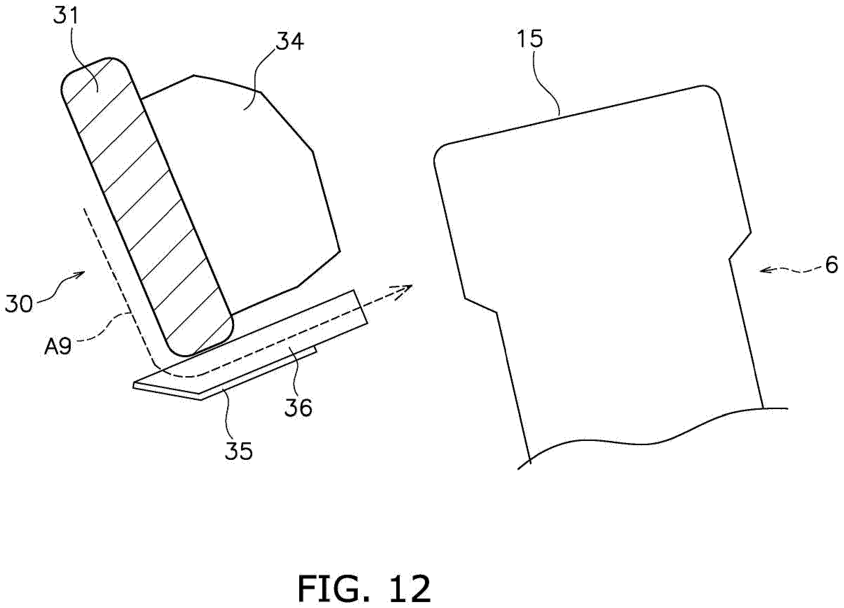

The structure of the radiator unit 30 is not limited to that of the above embodiment, and may be modified. FIG. 12 is a side view showing a radiator unit 30 according to a modification. As shown in FIG. 12, the radiator unit 30 may include an air guide plate 35.

The air guide plate 35 is disposed below the radiator 31. A front end of the air guide plate 35 is bent upward. The air guide plate 35 guides the running wind that flows downward along the radiator 31 without passing through the radiator 31 toward the cylinder head 15 of the engine 6 through below the radiator 31 as indicated by an arrow A9. As a result, running wind that has not passed through the radiator 31 is used to cool the engine 6.

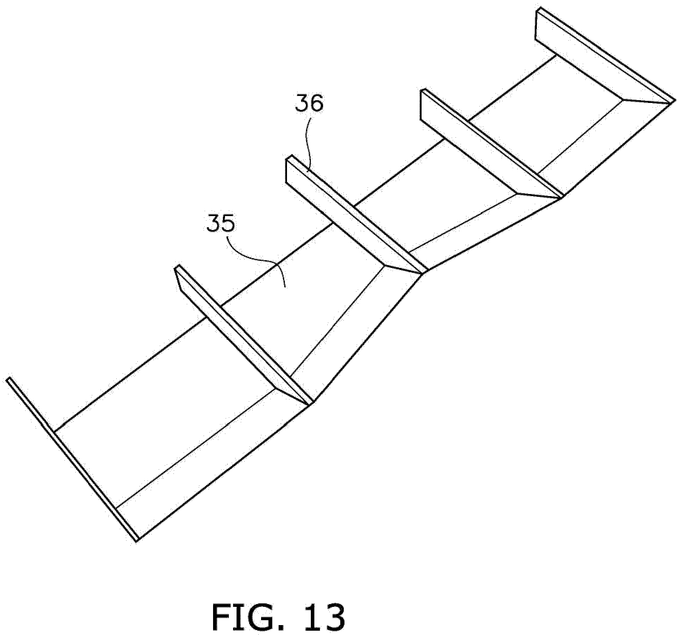

FIG. 13 is a perspective view of the air guide plate 35. As shown in FIG. 13, the air guide plate 35 includes a plurality of fins 36. In the drawing, only one of the plurality of fins 36 is denoted by reference numeral 36, and the reference numerals of the other fins 36 are omitted. The fins 36 extend in the front-rear direction on the air guide plate 35. The cooling efficiency of the engine 6 is improved by rectifying the running wind passing through the air guide plate 35 with the fins 36.

### REFERENCE SIGNS LIST

6: Engine
18: First side cowl
23: First opening
31: Radiator
32: Radiator fan
34: Fan cover
35: Air guide plate
36: Fin
46: Rear surface
51: First side outlet
48: Lateral guide rib
56: Second lateral outlet
61: Lower outlet
64: First bulging portion
67: Rear outlet
69: Rear guide rib

## Claims

1. A straddled vehicle (1) comprising:
a radiator (31);
a radiator fan (32) disposed behind the radiator (31) with regard to a vehicle front-rear direction; and
a fan cover (34) that covers the radiator fan (32) from behind with regard to the vehicle front-rear direction, wherein
the fan cover (34) includes a rear surface (46) facing the radiator fan (32) behind the radiator fan (32) with regard to the vehicle front-rear direction,
the rear surface (46) includes at least one bulging portion (64, 65) that bulges rearward with regard to the vehicle front-rear direction, and
the bulging portion (64, 65) includes a rear outlet (67) that opens laterally with regard to a vehicle left-right direction, **characterized in that** the rear outlet (67) is disposed to face the radiator fan (32) from behind with regard to the vehicle front-rear direction.

2. The straddled vehicle (1) according to claim 1, **characterized in that** the rear outlet (67) extends in a vertical direction with regard to a vehicle up-down direction.

3. The straddled vehicle (1) according to claim 1 or 2, **characterized in that** the fan cover (34) includes a rear guide rib (69) disposed to face the rear outlet (67) on the rear surface (46) of the fan cover (34).

4. The straddled vehicle (1) according to claim 3, **characterized in that** the rear guide rib (69) is configured to guide an exhaust air by the radiator fan (32) blown out from the rear outlet (67) downward with regard to the vehicle up-down direction.

5. The straddled vehicle (1) according to any one of claims 1 to 4, **characterized in that** the fan cover (34) includes a first lateral outlet (51) disposed to a lateral side of the radiator fan (32) with regard to the vehicle left-right direction.

6. The straddled vehicle (1) according to claim 5, **characterized in that** at least one lateral guide rib (48, 49, 54) disposed in the fan cover (34) and extending toward the first lateral outlet (51).

7. The straddled vehicle (1) according to claim 6, **characterized by**:
a first side cowl (18) that covers the radiator (31) from the lateral side with regard to the vehicle left-right direction, wherein
the first side cowl (18) includes a first opening (23) at least partially located above the fan cover (34) with regard to the vehicle up-down direction, and
the lateral guide rib (48, 49, 54) is disposed so as to blow the exhaust air by the radiator fan (32) obliquely upward with regard to the vehicle up-down direction from the first lateral outlet (51) toward the first opening (23) of the first side cowl (18).

8. The straddled vehicle (1) according to any one of claims 1 to 7, **characterized in that** the fan cover (34) includes a second lateral outlet (56) disposed to a lateral side of the radiator fan (32) with regard to the vehicle left-right direction.

9. The straddled vehicle (1) according to claim 8, **characterized in that** the second lateral outlet (56) is open so that the exhaust air by the radiator fan (32) is blown obliquely upward with regard to the vehicle up-down direction from the second lateral outlet (56) in accordance with a rotational direction of the radiator fan (32).

10. The straddled vehicle (1) according to claim 9, **characterized by**:
a second side cowl (19) that covers the radiator (31) from the lateral side with regard to the vehicle left-right direction, wherein
the second side cowl (19) includes a second opening (26) at least partially located above the fan cover (34) with regard to the vehicle up-down direction, and
the second lateral outlet (56) is open so that the exhaust air by the radiator fan (32) is blown out from the second lateral outlet (56) toward the second opening (26) in accordance with a rotational direction of the radiator fan (32).

11. The straddled vehicle (1) according to claim 5 and 8 and preferably any one of the claims 6 and 7 and 9 and 10, **characterized in that** the fan cover (34) further includes a lower outlet (61) disposed below the radiator fan (32) with regard to the vehicle up-down direction.

12. The straddled vehicle (1) according to claim 5 and 8 and preferably any one of the claims 6 and 7 and 9 to 11, **characterized in that**
the radiator fan (32) is configured to rotate counterclockwise as seen from a vehicle rear view,
the first lateral outlet (51) is disposed to a left of the radiator fan (32) with regard to the vehicle up-down direction,
the second lateral outlet (56) is disposed to a right of the radiator fan (32) with regard to the vehicle up-down direction,
the fan cover (34) include a lateral guide rib (48, 49, 54) disposed to blow out the exhaust air by the radiator fan (32) obliquely upward with regard to the vehicle up-down direction and leftward with regard to the vehicle up-down direction from the first lateral outlet (51), and
the second lateral outlet (56) is open so that the exhaust air by the radiator fan (32) is blown out obliquely upward with regard to the vehicle up-down direction and rightward with regard to the vehicle up-down direction from the second lateral outlet (56).

13. The straddled vehicle (1) according to claim 12, **characterized in that** an upper end of the first lateral outlet (51) is located below an upper end of the second lateral outlet (56) with regard to the vehicle up-down direction.

14. The straddled vehicle (1) according to any one of claims 1 to 13, **characterized by:**
an engine (6) disposed behind the radiator (31) with regard to the vehicle front-rear direction;
an air guide plate (35) disposed below the radiator (31) with regard to the vehicle up-down direction and configured to guide running wind flowing downward along the radiator (31) with regard to the vehicle up-down direction without passing through the radiator (31) toward the engine (6) through below the radiator (31) with regard to the vehicle up-down direction; and
at lest one fin (36) extending in the vehicle front-rear direction a front-rear direction on the air guide plate (35).

## Patentansprüche

1. Ein Spreiz-Sitz-Fahrzeug (1) mit:
einen Kühler (31);
ein Kühlerlüfterrad (32), das hinter dem Kühler (31) in Bezug auf eine Fahrzeug-Vorder-Rück-Richtung angeordnet ist; und
eine Lüfterradabdeckung (34), die das Kühlerlüfterrad (32) von hinten in Bezug auf die Fahrzeug-Vorder-Rück-Richtung abdeckt, wobei
die Lüfterradabdeckung (34) eine hintere Fläche (46) enthält, die dem Kühlerlüfterrad (32) hinter dem Kühlerlüfterrad (32) in Bezug auf die Fahrzeug-Vorder-Rück-Richtung zugewandt ist,
die hintere Fläche (46) enthält zumindest einen Wölbungsabschnitt (64, 65), der sich nach hinten in Bezug auf die Fahrzeug-Vorder-Rück-Richtung wölbt, und
der Wölbungsabschnitt (64, 65) enthält einen hinteren Auslass (67), der sich seitlich in Bezug auf eine Fahrzeug-Links-Rechts-Richtung öffnet, **dadurch gekennzeichnet,**
**dass** der hintere Auslass (67) angeordnet ist, um dem Kühlerlüfterrad (32) von hinten in Bezug auf die Fahrzeug-Vorder-Rück-Richtung zugewandt zu sein.

2. Das Spreiz-Sitz-Fahrzeug (1) gemäß Anspruch 1, **dadurch gekennzeichnet, dass** sich der hintere Auslass (67) in einer vertikalen Richtung in Bezug auf eine Fahrzeug-Auf-Ab-Richtung erstreckt.

3. Das Spreiz-Sitz-Fahrzeug (1) gemäß Anspruch 1 oder 2, **dadurch gekennzeichnet, dass** die Lüfterradabdeckung (34) eine hintere Führungsrippe (69) enthält, die so angeordnet ist, dass sie dem hinteren Auslass (67) auf der hinteren Fläche (46) der Lüfterradabdeckung (34) zugewandt ist.

4. Das Spreiz-Sitz-Fahrzeug (1) gemäß Anspruch 3, **dadurch gekennzeichnet, dass** die hintere Führungsrippe (69) konfiguriert ist, um eine Abluft, die durch das Kühlerlüfterrad (32) aus dem hinteren Auslass (67) ausgeblasen wird, nach unten in Bezug auf die Fahrzeug-Auf-Ab-Richtung zu leiten.

5. Das Spreiz-Sitz-Fahrzeug (1) gemäß irgendeinem der Ansprüche 1 bis 4, **dadurch gekennzeichnet, dass** die Lüfterradabdeckung (34) einen ersten seitlichen Auslass (51) enthält, der auf einer Lateralseite des Kühlerlüfterrads (32) in Bezug auf die Links-Rechts-Richtung des Fahrzeugs angeordnet ist.

6. Das Spreiz-Sitz-Fahrzeug (1) gemäß Anspruch 5, **dadurch gekennzeichnet, dass** zumindest eine seitliche Führungsrippe (48, 49, 54) in der Lüfterradabdeckung (34) angeordnet ist, und sich zu dem ersten seitlichen Auslasses (51) erstreckt.

7. Das Spreiz-Sitz-Fahrzeug (1) gemäß Anspruch 6, **gekennzeichnet durch:**
eine erste Seitenverkleidung (18), die den Kühler (31) von der Lateralseite in Bezug auf die Fahrzeug-Links-Rechts-Richtung abdeckt, wobei
die erste Seitenverkleidung (18) eine erste Öffnung (23) enthält, die zumindest teilweise oberhalb der Lüfterradabdeckung (34) in Bezug auf die Fahrzeug-Auf-Ab-Richtung positioniert ist, und
die seitliche Führungsrippe (48, 49, 54) angeordnet ist, so dass sie die Abluft durch das Kühlerlüfterrad (32) schräg nach oben in Bezug auf die Fahrzeug-Auf-Ab-Richtung von dem ersten seitlichen Auslass (51) zur der ersten Öffnung (23) der ersten Seitenverkleidung (18) bläst.

8. Das Spreiz-Sitz-Fahrzeug (1) gemäß irgendeinem der Ansprüche 1 bis 7, **dadurch gekennzeichnet, dass** die Lüfterradabdeckung (34) einen zweiten seitlichen Auslass (56) enthält, der an einer Lateralseite des Kühlerlüfterrads (32) in Bezug auf die Fahrzeug-Links-Rechts-Richtung angeordnet ist.

9. Das Spreiz-Sitz-Fahrzeug (1) gemäß Anspruch 8, **dadurch gekennzeichnet, dass** der zweite seitliche Auslass (56) offen ist, so dass die Abluft durch das Kühlerlüfterrad (32) schräg nach oben in Bezug auf die Fahrzeug-Auf-Ab-Richtung aus dem zweiten seitlichen Auslass (56) entsprechend einer Drehrichtung des Kühlerlüfterrads (32) geblasen wird.

10. Das Spreiz-Sitz-Fahrzeug (1) gemäß Anspruch 9, **gekennzeichnet durch:**
eine zweite Seitenverkleidung (19), die den Kühler (31) von der Lateralseite in Bezug auf die Fahrzeug-Links-Rechts-Richtung abdeckt, wobei
die zweite Seitenverkleidung (19) eine zweite Öffnung (26) enthält, die zumindest teilweise oberhalb der Lüfterradabdeckung (34) in Bezug auf die Fahrzeug-Auf-Ab-Richtung positioniert ist, und
der zweite seitliche Auslass (56) geöffnet ist, so dass die Abluft durch das Kühlerlüfterrad (32) aus dem zweiten seitlichen Auslass (56) in Richtung der zweiten Öffnung (26) in Übereinstimmung mit einer Drehrichtung des Kühlerlüfterrads (32) ausgeblasen wird.

11. Das Spreiz-Sitz-Fahrzeug (1) gemäß Anspruch 5 und 8 und vorzugsweise gemäß irgendeinem der Ansprüche 6 und 7 und 9 und 10, **dadurch gekennzeichnet, dass** die Lüfterradabdeckung (34) weiterhin einen unteren Auslass (61) enthält, der unterhalb des Kühlerlüfterrads (32) in Bezug auf die Fahrzeug-Auf-Ab-Richtung angeordnet ist.

12. Das Spreiz-Sitz-Fahrzeug (1) gemäß Anspruch 5 und 8 und vorzugsweise gemäß irgendeinem der Ansprüche 6 und 7 und 9 bis 11, **dadurch gekennzeichnet, dass** das Kühlerlüfterrad (32) konfiguriert ist, um sich gegen den Uhrzeigersinn, wenn von einer Fahrzeugrückseite aus gesehen, zu drehen,
der erste seitliche Auslass (51) in Bezug auf die Fahrzeug-Auf-Ab-Richtung links vom Kühlerlüfterrad (32) angeordnet ist,
der zweite seitliche Auslass (56) in Bezug auf die Fahrzeug-Auf-Ab-Richtung rechts vom Kühlerlüfterrad (32) angeordnet ist,
die Lüfterradabdeckung (34) eine seitliche Führungsrippe (48, 49, 54) enthält, die angeordnet ist, um die Abluft durch das Kühlerlüfterrad (32) schräg nach oben vom ersten seitlichen Auslass (51) in Bezug auf die Fahrzeug-Auf-Ab-Richtung und nach links in Bezug auf die Fahrzeug-Auf-Ab-Richtung auszublasen, und
der zweite seitliche Auslass (56) offen ist, so dass die Abluft durch das Kühlerlüfterrad (32) aus dem zweiten seitlichen Auslass (56) schräg nach oben in Bezug auf die Fahrzeug-Auf-Ab-Richtung und nach rechts in Bezug auf die Fahrzeug-Auf-Ab-Richtung ausgeblasen wird.

13. Das Spreiz-Sitz-Fahrzeug (1) gemäß Anspruch 12, **dadurch gekennzeichnet, dass** ein oberes Ende des ersten seitlichen Auslasses (51) unterhalb eines oberen Endes des zweiten seitlichen Auslasses (56) in Bezug auf die Fahrzeug-Auf-Ab-Richtung angeordnet ist.

14. Das Spreiz-Sitz-Fahrzeug (1) gemäß irgendeinem der Ansprüche 1 bis 13, **gekennzeichnet durch:**
einen Motor (6), der hinter dem Kühler (31) in Bezug auf die Fahrzeug-Vorder-Rück-Richtung angeordnet ist;
eine Luftleitplatte (35), die unterhalb des Kühlers (31) in Bezug auf die Fahrzeug-Auf-Ab-Richtung angeordnet und konfiguriert ist, um Fahrtwind, der entlang des Kühlers (31) nach unten strömt in Bezug auf die Fahrzeug-Auf-Ab-Richtung, ohne durch den Kühler (31) in Richtung des Motors (6) zu gelangen, unterhalb des Kühlers (31) in Bezug auf die Fahrzeug-Auf-Ab-Richtung zu leiten; und
zumindest eine Rippe (36), die sich in Fahrzeug-Vorder-Rück-Richtung an der Luftleitplatte (35) erstreckt.

## Revendications

1. Véhicule à selle (1) comprenant :
un radiateur (31) ;
un ventilateur de radiateur (32) disposé derrière le radiateur (31) par rapport à la direction avant-arrière du véhicule ; et
un capot de ventilateur (34) qui couvre le ventilateur de radiateur (32) par l'arrière par rapport à la direction avant-arrière du véhicule, dans lequel
le capot de ventilateur (34) comprend une surface arrière (46) faisant face au ventilateur de radiateur (32) derrière le ventilateur de radiateur (32) par rapport à la direction avant-arrière du véhicule,
la surface arrière (46) comprend au moins une partie bombée (64, 65) qui est bombée vers l'arrière par rapport à la direction avant-arrière du véhicule, et
la partie bombée (64, 65) comprend une sortie arrière (67) qui s'ouvre latéralement par rapport à la direction gauche-droite du véhicule, **caractérisée par le fait que** la sortie arrière (67) est disposée de manière à faire face au ventilateur du radiateur (32) depuis l'arrière par rapport à la direction avant-arrière du véhicule.

2. Véhicule à selle (1) selon la revendication 1, **caractérisé par le fait que** la sortie arrière (67) s'étend dans une direction verticale par rapport à la direction haut-bas du véhicule.

3. Véhicule à selle (1) selon la revendication 1 ou 2, **caractérisé par le fait que** le capot du ventilateur (34) comprend une nervure de guidage arrière (69) disposée pour faire face à la sortie arrière (67) sur la surface arrière (46) du capot de ventilateur (34).

4. Véhicule à selle (1) selon la revendication 3, **caractérisé en ce que** la nervure de guidage arrière (69) est configurée pour guider l'air d'échappement du ventilateur du radiateur (32) rejeté de la sortie arrière (67) vers le bas par rapport à la direction haut-bas du véhicule.

5. Véhicule à selle (1) selon l'une quelconque des revendications 1 à 4, **caractérisé par le fait que**
le capot du ventilateur (34) comprend une première sortie latérale (51) disposée sur un côté latéral du ventilateur du radiateur (32) par rapport à la direction gauche-droite du véhicule.

6. Véhicule à selle (1) selon la revendication 5, **caractérisé par** au moins une nervure de guidage latérale (48, 49, 54) disposée dans le capot du ventilateur (34) et s'étendant vers la première sortie latérale (51).

7. Véhicule à selle (1) selon la revendication 6, **caractérisé par** :
un premier capot latéral (18) qui couvre le radiateur (31) du côté latéral par rapport à la direction gauche-droite du véhicule, dans lequel
le premier capot latéral (18) comprend une première ouverture (23) au moins partiellement située au-dessus du capot du ventilateur (34) dans la direction haut-bas du véhicule, et
la nervure de guidage latérale (48, 49, 54) est disposée de manière à rejeter l'air d'échappement du ventilateur de radiateur (32) obliquement vers le haut par rapport à la direction haut-bas du véhicule, depuis la première sortie latérale (51) vers la première ouverture (23) du premier capot latéral (18).

8. Véhicule à selle (1) selon l'une quelconque des revendications 1 à 7, **caractérisé en ce que** le capot du ventilateur (34) comprend une seconde sortie latérale (56) disposée sur un côté latéral du ventilateur du radiateur (32) par rapport à la direction gauche-droite du véhicule.

9. Véhicule à selle (1) selon la revendication 8, **caractérisé en ce que** la seconde sortie latérale (56) est ouverte de sorte que l'air d'échappement du ventilateur de radiateur (32) est rejeté obliquement vers le haut par rapport à la direction haut-bas du véhicule à partir de la seconde sortie latérale (56) conformément à une direction de rotation du ventilateur de radiateur (32).

10. Véhicule à selle (1) selon la revendication 9, **caractérisé par** :
un second capot latéral (19) qui couvre le radiateur (31) du côté latéral par rapport à la direction gauche-droite du véhicule, dans lequel
le second capot latéral (19) comprend une seconde ouverture (26) au moins partiellement située au-dessus du capot du ventilateur (34) dans la direction haut-bas du véhicule, et
la seconde sortie latérale (56) est ouverte de sorte que l'air d'échappement du ventilateur du radiateur (32) est rejeté de la seconde sortie latérale (56) vers la seconde ouverture (26) en fonction du sens de rotation du ventilateur de radiateur (32).

11. Véhicule à selle (1) selon les revendications 5 et 8 et de préférence l'une quelconque des revendications 6 et 7 et 9 et 10, **caractérisé en ce que** le capot de ventilateur (34) comprend en outre une sortie inférieure (61) disposée au-dessous du ventilateur de radiateur (32) par rapport à la direction haut-bas du véhicule.

12. Véhicule à selle (1) selon les revendications 5 et 8 et de préférence selon l'une quelconque des revendications 6 et 7 et 9 à 11, **caractérisé en ce que**
le ventilateur du radiateur (32) est configuré pour tourner dans le sens inverse des aiguilles d'une montre, vu de l'arrière du véhicule,
la première sortie latérale (51) est située à gauche du ventilateur de radiateur (32) par rapport à la direction haut-bas du véhicule,
la seconde sortie latérale (56) est située à droite du ventilateur du radiateur (32) dans la direction haut-bas du véhicule,
le capot du ventilateur (34) comprend une nervure de guidage latérale (48, 49, 54) disposée pour rejeter l'air d'échappement du ventilateur du radiateur (32) obliquement vers le haut par rapport à la direction haut-bas du véhicule et vers la gauche par rapport à la direction haut-bas du véhicule à partir de la première sortie latérale (51), et
la seconde sortie latérale (56) est ouverte de sorte que l'air d'échappement du ventilateur du radiateur (32) est rejeté obliquement vers le haut par rapport à la direction haut-bas du véhicule et vers la droite par rapport à la direction haut-bas du véhicule à partir de la seconde sortie latérale (56).

13. Véhicule à selle (1) selon la revendication 12, **caractérisé en ce qu'**une extrémité supérieure de la première sortie latérale (51) est située en dessous d'une extrémité supérieure de la seconde sortie latérale (56) par rapport à la direction haut-bas du véhicule.

14. Véhicule à selle (1) selon l'une quelconque des revendications 1 à 13, **caractérisé par :**
un moteur (6) placé derrière le radiateur (31) par rapport à la direction avant-arrière du véhicule ;
une plaque de guidage d'air (35) disposée sous le radiateur (31) par rapport à la direction haut-bas du véhicule et configurée pour guider le courant de vent vers le bas le long du radiateur (31) par rapport à la direction haut-bas du véhicule sans passer à travers le radiateur (31) vers le moteur (6) par le dessous du radiateur (31) par rapport à la direction haut-bas du véhicule ; et
au moins une ailette (36) s'étendant dans la direction avant-arrière du véhicule sur la plaque de guidage d'air (35).
